# EUROPÄISCHE PATENTSCHRIFT

(11) **EP 0 768 055 B1**
(45) Veröffentlichungstag und Bekanntmachung des Hinweises auf die Patenterteilung: **27.03.2002**
(21) Anmeldenummer: 96113327.9
(22) Anmeldetag: 20.08.1996
(51) Int. Cl.: A47J 27/16, A47J 39/00

(54) **Backofen zum Dampfgaren**
Baking oven for steam cooking
Four pour cuire à la vapeur

(30) Priorität: 10.10.1995 DE 19537751
(43) Veröffentlichungstag der Anmeldung: 16.04.1997
(73) Patentinhaber: BSH Bosch und Siemens Hausgeräte GmbH, 81669 München (DE)
(72) Erfinder: Kieslinger, Michael, Dipl.-Ing., 85354 Freising (DE)

(56) Entgegenhaltungen:
- EP-A- 0 277 337
- DE-A- 4 225 696
- DE-C- 4 403 386
- DE-U- 8 131 827
- US-A- 4 851 644

## Beschreibung

Die vorliegende Erfindung betrifft einen Backofen nach dem Oberbegriff des Anspruches 1.

Ein derartiger Backofen ist bekannt aus der DE-U-8131827.8, wobei bei der Zubereitung von Speisen in dem durch die Tür verschließbaren und mit einem steuerbaren Wrasenabzug versehenen Garraum ein Dampf-Luft-Gemisch als Wärmeträger umgewälzt wird. In einer Dämpfphase erzeugt die Verdampfungseinrichtung die benötigte Menge Dampf, die durch das Gebläserad in den Garraum gedrückt wird.

Nachteilig dabei ist, daß durch die Verwirbelung und die dadurch verursachte erhöhte Geschwindigkeit des Wärmeträgers Dampf der Wirkungsgrad des kondensativen Wärmeübergangs von dem Dampf auf das Gargut verschlechtert wird, daß durch die Vermischung von Luft und Dampf der Wirkungsgrad des Wärmeübergangs verschlechtert wird, und daß das Vorbeistreichen des Dampf-Luft-Gemisches infolge der Verwirbelung das unerwünschte Austrocknen der Oberflächenschicht des Gargutes fördert.

Aufgabe der vorliegenden Erfindung ist es deshalb, einen Backofen zum Dampfgaren und ein Garverfahren mit Dampf bereitzustellen, wobei mit geringem Energieaufwand günstige Backergebnisse erreichbar sind.

Erfindungsgemäß ist dies dadurch erreicht, daß die Steuereinrichtung so ausgebildet ist, daß zumindest während des ersten Einleitens des Dampfes in den Backraum das Gebläse abgeschaltet hält. Der Dampf strömt aus der Verdampfungseinrichtung aufgrund seines Auftriebes von unten nach oben am Gargut vorbei oder breitet sich von oben nach unten, die Luft im Backraum verdrängend, entsprechend langsam aus. Es ist gewährleistet, daß im wesentlichen reiner Dampf mit einer nicht zu hohen Geschwindigkeit das Gargut umgibt und so der kondensative Wärmeübergang stattfindet.

Vorteilhafterweise heizt die Steuereinrichtung durch die Ansteuerung des Heizkörpers die Innenwandungen der Backofenmuffel und der Tür vor dem ersten Einleiten des Dampfes in den Backraum auf. Der Kondensationsvorgang konzentriert sich dadurch auf das Gargut. Ein unerwünschter Niederschlag des Dampfes an kalten Stellen der Backrauminnenwandung, insbesondere der Tür ist vermieden. Ein gleichmäßiges Aufheizen der Innenwandung ist gewährleistet, wenn die Steuereinrichtung das Gebläse während des Vorheizens zumindest zeitweise einschaltet.

Gemäß einer bevorzugten Ausführungsform ist die Dampfaustrittsöffnung im unteren Bereich des Backraumes angeordnet. Da Dampf leichter als Luft ist, füllt dieser den Backraum von oben nach unten, die zuvor im Backraum befindliche Luft nach unten verdrängend. Das heißt, daß beim Einleiten des Dampfes zunächst ausschließlich heiße Luft aus dem Backraum verdrängt wird und nicht der zur Wärmeübertragung vorgesehene Dampf. Das Befüllen des Backraumes mit Dampf kann zum einen durch eine dampfempfindliche Sensorik im Bereich der Dampfaustrittsöffnung gesteuert sein, die den ersten austretenden Dampf der Steuereinrichtung meldet, die daraufhin die Dampferzeugung und -einleitung in den Backraum beendet. Zum anderen kann die Dampfeinleitung auch über eine Zeitsteuerung beendet werden, wobei die zum Befüllen des Backraums mit Dampf erforderliche Zeit experimentell gewonnen wird. Die Dampfaustrittsöffnung kann sich hierbei sowohl an der Seiten als auch an der Rückwandung der Muffel befinden, es ist jedoch konstruktiv besonders einfach, ein offenes System dadurch zu realisieren, daß die Dampfaustrittsöffnung zwischen der Backofenmuffel bzw. deren Flansch und der Ofentür gebildet ist.

Um eine Verschmutzung der Verdampfungseinrichtung oder der Dampfzuleitung zum Backraum durch Kondensat zu vermeiden, erfolgt die Einspeisung des Dampfes in den Backraum vorteilhafterweise in dessen oberen Bereich. Wenn die Verdampfungseinrichtung aus Platz- und Temperaturgründen jedoch unterhalb des Backraums anzuordnen ist und die Verbindungsleitungen von der eigentlichen Verdampfungseinrichtung zum Backraum kurz zu halten sind, ist es günstig, die Einspeisung des Dampfes in den Backraum in dessen unteren Bereich vorzunehmen.

Nachfolgend sind anhand schematischer Darstellungen zwei Ausführungsbeispiele des erfindungsgemäßen Backofens und das erfindungsgemäße Garverfahren mit Dampf beschrieben. Es zeigt:

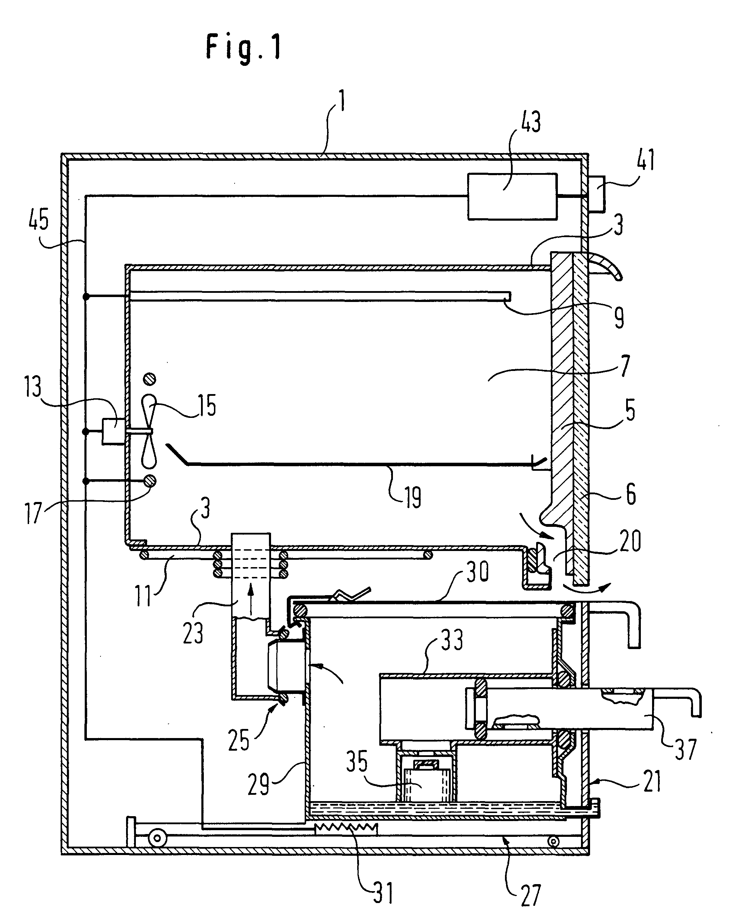

- Fig. 1: in einer Schnittdarstellung einer Seitenansicht einen Backofen gemäß dem ersten Ausführungsbeispiel;
- Fig. 2: in einer Schnittdarstellung einer Seitenansicht stark vereinfacht einen Backofen gemäß dem zweiten Ausführungsbeispiel und
- Fig. 3: ein Ablaufdiagramm des Garverfahrens.

Ein Backofen weist in einem Gehäuse 1 eine Backofenmuffel 3 auf, die allseitig von nicht gezeigtem Isoliermaterial umgeben ist. Die Muffel 3 ist an ihrer Vorderseite durch eine Backofentür 5 verschließbar, die mit einer Frontglasscheibe 6 versehen ist, und bildet den Back- bzw. Garraum 7. Durch Ziehen an einem an der Garraumtür 5 befestigten Griff wird der dahinter befindliche Garraum 7 der Bedienperson zugänglich. Im Bereich der Decke des Garraums 7 ist ein Oberhitze-bzw. Grillheizkörper 9 im Garraum angeordnet. Unterhalb des Bodens der Backofenmuffel 3 ist ein Unterhitze-Heizkörper 11 befestigt. Im Bereich der Rückwand der Backofenmuffel 3 ist außerhalb dieser ein Elektromotor 13 befestigt, der über eine durch die Rückwandung ragende Achse ein im Backraum 7 befindliches Gebläse 15 antreibt. Dieses ist von einem ringförmigen Gebläse-Heizkörper 17 umgeben (stark vereinfacht dargestellt). Zum Ablegen des Gargutes im Backraum 7 ist in diesem in verschiedenen Höhen ein Gargutträger 19 anbringbar, der selbst oder zwischen sich und den Seitenwandungen des Garraums 7 Öffnungen zum ungehinderten Strömen des Dampfes von unten nach oben bzw. umgekehrt und insbesondere nahe zum Gargut aufweist. Im unteren, vorderen Bereich des Garraums 7 befindet sich unterhalb eines Vorsprungs der Tür 5 eine Wrasenauslaß- bzw. Dampfaustrittsöffnung 20, die den Backraum 7 mit der Atmosphäre verbindet.

Unterhalb der Backofenmuffel 3 ist eine Verdampfungseinrichtung 21 entsprechend der deutschen Patentanmeldung P 44 27 460.2-16 der Anmelderin angeordnet. Der Unterhitze-Heizkörper 11 ist wärmetechnisch sowohl an den Muffelboden als auch an ein Dampfzuleitungsrohr 23 angekoppelt, das in den Garraum 7 mündet. Am entgegengesetzten Ende ist das Dampfzuleitungsrohr 23 über eine Dampfkupplung 25 an die eigentlichen Verdampfungseinrichtung 21 angekoppelt. Diese ist in dem unter dem Garraum 7 befindlichen Innenraum des Backofens in einem herausziehbaren Ofenschubkasten 27 untergebracht. Im Ofenschubkasten 27 ist ein Verdampfungsbehältnis 29 mit einem Deckel 30 und an der Unterseite des Bodens eine Dampfheizung 31 vorgesehen. Die Verdampfungseinrichtung 21 besteht weiterhin aus einem Wasserschubladen-Führungsrohr 33 mit einer Wasserablauföffnung, einem Schwimmer 35 im Schwimmerführungsrohr und einer Wasserschublade 37 gemäß der P 44 27 460.2-16. Die Funktion der Verdampfungseinrichtung 21 ist ebenfalls in dieser Anmeldung beschrieben.

Im oberen Bereich der Frontseite des Backofens sind verschiedene Anzeige- und Bedienungselemente 41 angeordnet. Dahinter innerhalb des Gehäuses 1 ist eine Steuereinrichtung 43 plaziert, die über Steuerleitungen 45 zumindest mit den Heizkörpern 9, 11, 17, 31 und dem Gebläse 13, 15 verbunden ist. Im Betrieb stellt eine Bedienperson an den Bedienelementen 41 den gewünschten Backvorgang ein, der über die Steuereinrichtung gesteuert wird. Beim Dampfgaren werden zunächst die Innenwandungen der Muffel 3 und der Tür 5 auf etwa 100 bis 120°C vorgeheizt. Dabei steuert die Steuereinrichtung 43 das Gebläse 17 an, um eine gleichmäßige Erwärmung der Garraumwandung zu gewährleisten. Danach wird das Gebläse 15 bzw. der Motor 13 durch die Steuereinrichtung 43 abgeschaltet und die Dampferzeugung bzw. die Einleitung des Dampfes in den Garraum 7 gestartet. Dazu aktiviert die Steuereinrichtung 43 den Dampfheizkörper 31. Über das Dampfzuleitungsrohr 23 strömt der im Verdampfungsbehältnis 29 erzeugte Dampf in den Garraum 7 und von dort steigt der Dampf aufgrund seines im Vergleich zu Luft geringeren spezifischen Gewichts langsam nach oben. Dabei strömt er am Gargutträger 19 vorbei bzw. durch ihn durch am Gargut vorbei nach oben. Der Garraum 7 füllt sich dann von oben nach unten schichtenweise, die heiße Luft nach unten verdrängend. Die heiße Luft entweicht durch die Dampfaustrittsöffnung 20 ins Freie. Nach einer vorbestimmten Zeit beendet die Steuereinrichtung 43 die Dampferzeugung, nämlich wenn der Garraum 7 im wesentlichen mit Dampf gefüllt ist bzw. gewährleistet ist, daß das Gargut vollständig von einer homogenen Dampfatmosphäre umgeben ist. Um das Bedampfen des Gargutes günstig zu gestalten, wird in den Garraum 7 zyklisch Dampf eingespeist. Bei der Durchführung besonderer Garvorgänge kann die Steuereinrichtung 43 auch ausgewählte Heizkörper zur Wärmebeaufschlagung des Gargutes in Kombination mit oder gänzlich ohne Dampf ansteuern.

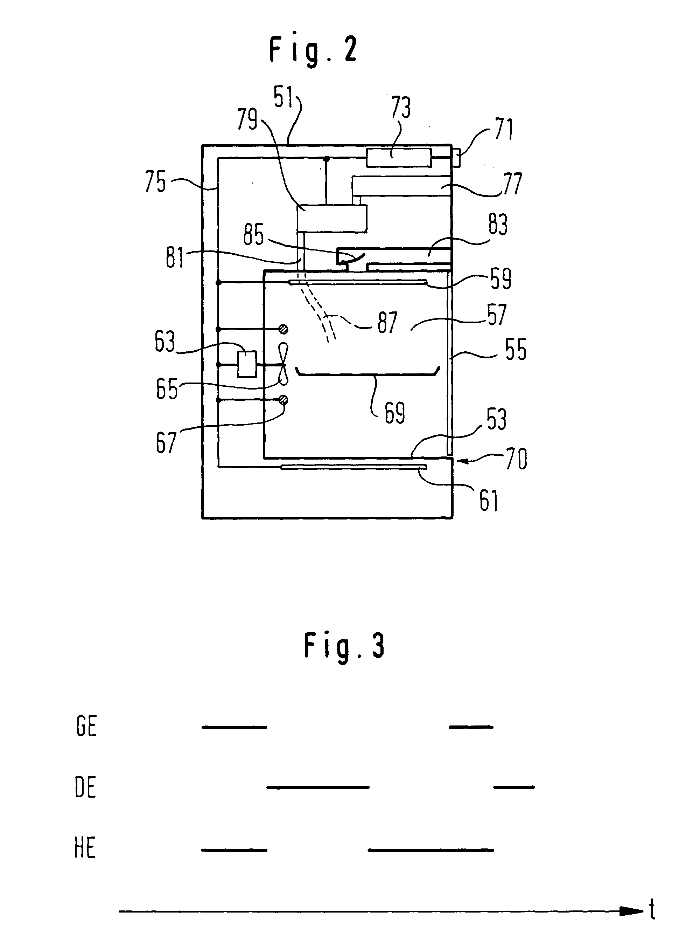

In Figur 2 ist gemäß dem zweiten Ausführungsbeispiel ein Backofen stark vereinfacht gezeigt. In einem Gehäuse 51 befindet sich eine Backofenmuffel 53, die mit einer Backofentür 55 verschließbar ist, wodurch der Backraum 57 gebildet ist. Entsprechend dem ersten Ausführungsbeispiel sind dem Backraum 57 ein Oberhitzeheizkörper 59, ein Unterhitzeheizkörper 61, ein Gebläsemotor 63, ein Gebläse 65, ein Gebläse-heizkörper 67 und ein Gargutträger 69 zugeordnet. Mittels nicht näher gezeigter Prägungen zwischen dem Boden der Tür 55 und dem Flansch der Backofenmuffel 53 ist eine Dampfaustrittsöffnung 70 gebildet und damit stets ein offenes System beim Dampfgaren gewährleistet. Über Bedienelemente 71 ist eine im oberen Bereich des Gehäuses 51 angeordnete Steuereinrichtung 73 betätigbar. Diese ist über Steuerleitungen 75, entsprechend dem ersten Ausführungsbeispiel, mit den zu steuernden Komponenten des Backofens verbunden. Weiterhin befindet sich oberhalb der Tür 55 im Frontbereich des Backofens eine in den Backofen einschiebbar und herausziehbar gelagerte Wasserschublade 77. An deren Boden weist diese ein Auslauföffnung auf, durch die das Wasser in eine Verdampfungseinrichtung 79 laufen kann. Über nicht gezeigte Heizelemente wird in der Verdampfungseinrichtung 79 eine gewünschte Menge Dampf einer vorgebbaren Temperatur erzeugt und über ein Dampfzuleitungsrohr 81 von oben in den Backraum 57 eingespeist. Die Backofenmuffel 53 ist über einen an deren Decke angeschlossenen Wrasenkanal 83 mit der Atmosphäre verbunden. Dabei ist in dem Wrasenkanal 83 eine steuerbare Bimetallklappe 85 angeordnet, die bei Bedarf den Wrasenkanal 83 verschließt oder die Verbindung vom Backraum 57 zur Außenluft freigibt. Beim Betrieb des Backofens wird von oben in den Backraum 57 Dampf eingeleitet, der aufgrund seines Auftriebes sich von oben nach unten ausbreitend, schichtenweise die Luft nach unten und durch die Dampfaustrittsöffnung 70 aus dem Backraum 57 verdrängt. Die Bedampfung bzw. abgewandelte Garprozesse können entsprechend wie im ersten Ausführungsbeispiel durchgeführt werden. Ein unerwünschtes Entweichen des Dampfes aus dem Backraum 57 ist dadurch vermieden, daß die Steuereinrichtung 73 mit der Bimetallklappe 85 den Wrasenkanal 83 verschließt. Um den Dampf direkt an das Gargut leiten zu können, kann an die Austrittsöffnung des Dampfzuleitungsrohres 81 im Bereich der Muffeldecke eine beispielsweise schlauchförmige Dampfverteilungseinrichtung 87 angeschlossen sein, die den Dampf erst in unmittelbarer Nähe des Gargutes in den Backraum drückt (unterbrochene Linien).

In dem in Figur 3 dargestellten Garprozeß ist das Eintreten eines Ereignisses über der Zeitachse (t) durch eine waagerechte Linie gezeigt. Dabei bedeuten GE: Gebläse eingeschaltet, DE: Dampf eingeleitet und HE: Heizung eingeschaltet.

## Patentansprüche

1. Backofen mit einem Backraum, der durch eine mit einer Backraumtür verschließbaren Backofenmuffel gebildet ist und eine Dampfaustrittsöffnung aufweist, mit dem Backraum zugeordneten Gebläse und mindestens einem Heizkörper, mit einer Verdampfungseinrichtung, die Dampf erzeugt und in den Backraum einspeist, und mit einer Steuereinrichtung zur Steuerung der Verdampfungseinrichtung, des Gebläses und des Heizkörpers, **dadurch gekennzeichnet, daß** die Steuereinrichtung (43, 73) so ausgebildet ist, daß sie zumindest während des ersten Einleitens des Dampfes in den Backraum (7, 57) das Gebläse (15, 65) abgeschaltet hält.

2. Backofen nach Anspruch 1, **dadurch gekennzeichnet, daß** die Steuereinrichtung (43, 73) vor dem ersten Einleiten des Dampfes in den Backraum (7, 57) die Innenwandungen der Backofenmuffel (3, 53) und der Tür (5, 55) durch den Heizkörper vorheizt.

3. Backofen nach Anspruch 2, **dadurch gekennzeichnet, daß** die Steuereinrichtung (43, 73) das Gebläse (15, 65) während des Vorheizens zumindest zeitweise einschaltet.

4. Backofen nach einem der vorherigen Ansprüche, **dadurch gekennzeichnet, daß** die Dampfaustrittsöffnung (20, 70) im unteren Bereich des Backraums (7, 57) angeordnet ist.

5. Backofen nach Anspruch 4, **dadurch gekennzeichnet, daß** die Dampfaustrittsöffnung (20, 70) zwischen der Backofenmuffel (3, 53) bzw. deren Flansch und der Ofentür (5, 55) gebildet ist.

6. Backofen nach einem der vorherigen Ansprüche, **dadurch gekennzeichnet, daß** die Einspeisung des Dampfes in den Backraum (57) in dessen oberen Bereich erfolgt.

7. Verfahren zum Behandeln eines in einem Garraum angeordneten Gargutes mit Dampf, wobei in einem ersten Schritt Dampf in den Garraum solange eingeleitet wird, bis der Garraum bzw. das Gargut ausreichend mit Dampf versorgt ist, und wobei in einem zweiten Schritt die Dampfzufuhr zumindest zeitweise unterbunden wird und ggf. das Gargut durch dem Garraum zugeordnete Heizkörper bzw. ein im Garraum angeordnetes Gebläse behandelt wird, **dadurch gekennzeichnet, daß** während des ersten Schrittes das Gebläse (15, 65) abgeschaltet wird.

8. Verfahren nach Anspruch 7, **dadurch gekennzeichnet, daß** vor dem ersten Schritt der Garraum (7, 57) vorgeheizt wird.

## Claims

1. Baking oven with a baking chamber, which is formed by a baking oven muffle closing by a baking chamber door and which has a steam outlet opening, with a fan and at least one heating body associated with the baking chamber, with an evaporator which generates steam and feeds it into the baking chamber, and with a control device for controlling the evaporator, the fan and the heating body, **characterised in that** the control device (43, 73) is so constructed that the fan (15, 65) is kept switched off at least during the first introduction of steam into the baking chamber (7, 57).

2. Baking oven according to claim 1, **characterised in that** the control device (43, 73) preheats the inner walls of the baking oven muffle (3, 53) and the door (5, 55) by the heating body before the first introduction of steam into the baking chamber (7, 57).

3. Baking oven according to claim 2, **characterised in that** the control device (43, 73) switches on the fan (15, 65) at least for a time during the preheating.

4. Baking oven according to one of the preceding claims, **characterised in that** the steam outlet opening (20, 70) is arranged in the lower region of the baking chamber (7, 57).

5. Baking oven according to claim 4, **characterised in that** the steam outlet opening (20, 70) is formed between the baking oven muffle (3, 53), or the flange thereof, and the oven door (5, 55).

6. Baking oven according to one of the preceding claims, **characterised in that** the feed of steam into the baking chamber (57) takes place in the upper region thereof.

7. Method of treating, with steam, stock which is to be cooked and which is arranged in a cooking chamber, wherein steam is conducted into the cooking chamber in a first step until the cooking chamber or the stock to be cooked is sufficiently supplied with steam and wherein the steam feed is suppressed in a second step at least for a time and in the case of need the stock, which is to be cooked, is treated by the heating body associated with the cooking chamber or by a fan arranged in the cooking chamber, **characterised in that** the fan (15, 65) is switched off during the first step.

8. Method according to claim 7, **characterised in that** the cooking chamber (7, 57) is preheated before the first step.

## Revendications

1. Four avec un espace de cuisson qui est formé par une moufle de four pouvant être fermée par une porte d'espace de cuisson et présente une ouverture de sortie de la vapeur, avec le ventilateur associé à l'espace de cuisson et au moins un corps de chauffe, avec un dispositif de vaporisation, qui produit de la vapeur et alimente l'espace de cuisson, et avec un dispositif de commande pour commander le dispositif de vapeur, le ventilateur et le corps de chauffe, **caractérisé en ce que** le dispositif de commande (43, 73) est conçu de manière telle qu'il maintient le ventilateur (15, 65) déconnecté au moins pendant la première introduction de la vapeur dans l'espace de cuisson (7, 57).

2. Four selon la revendication 1, **caractérisé en ce que** le dispositif de commande (43, 73) avant la première introduction de la vapeur dans l'espace de cuisson (7, 57) préchauffe les parois intérieures de la moufle de four (3, 53) et de la porte (5, 55) par le corps de chauffe.

3. Four selon la revendication 2, **caractérisé en ce que** le dispositif de commande (43, 73) connecte au moins temporairement le ventilateur (15, 65) pendant le préchauffage.

4. Four selon l'une des revendications précédentes, **caractérisé en ce que** l'ouverture de sortie de la vapeur (20, 70) est disposée dans la zone inférieure de l'espace de cuisson (7, 57).

5. Four selon la revendication 4, **caractérisé en ce que** la sortie de l'ouverture de cuisson (20, 70) est formée entre la moufle de four (3, 53) resp. sa bride et la porte de four (5, 55).

6. Four selon l'une des revendications précédentes, **caractérisée en ce que** l'alimentation de la vapeur dans l'espace de cuisson (57) se fait dans sa zone supérieure.

7. Procédé de traitement à la vapeur d'un produit de cuisson disposé dans un espace de cuisson, dans lequel lors d'une première étape de la vapeur est introduite dans l'espace de cuisson jusqu'à ce que l'espace de cuisson resp. le produit de cuisson soit approvisionné suffisamment en vapeur, et dans lequel lors d'une seconde étape l'alimentation en vapeur est au moins temporairement arrêtée et, le cas échéant, le produit de cuisson est traité par le corps de chauffe associé à l'espace de cuisson resp. par un ventilateur disposé dans l'espace de cuisson, **caractérisé en ce que** pendant la première étape, le ventilateur (15, 65) est déconnecté.

8. Procédé selon la revendication 7, **caractérisé en ce qu'**avant la première étape, l'espace de cuisson (7, 57) est préchauffé.
